# EUROPÄISCHE PATENTSCHRIFT

(11) **EP 0 778 421 B1**
(45) Veröffentlichungstag und Bekanntmachung des Hinweises auf die Patenterteilung: **11.07.2001**
(21) Anmeldenummer: 96118813.3
(22) Anmeldetag: 23.11.1996
(51) Int. Cl.: F16C 11/06

(54) **Kugelgelenk**
Ball joint
Joint à rotule

(30) Priorität: 07.12.1995 DE 19545567
(43) Veröffentlichungstag der Anmeldung: 11.06.1997
(73) Patentinhaber: TRW Fahrwerksysteme GmbH & Co. KG, 40547 Düsseldorf (DE)
(72) Erfinder: Prickler, Wolfgang, Dipl.-Ing., 41654 Kaarst (DE); Wutzler, Christian, 41564 Kaarst (DE); Kaussen, Matthias, Dipl.-Ing., 45219 Essen (DE)
(74) Vertreter: Stenger, Watzke & Ring Patentanwälte

(56) Entgegenhaltungen:
- EP-A- 0 020 214
- FR-A- 1 215 375
- FR-A- 2 449 819
- FR-A- 2 522 090

## Beschreibung

Die Erfindung betrifft ein Kugelgelenk aus einem Kugelzapfen und einem Gelenkgehäuse, in dem die Gelenkkugel mittels einer aus Kunststoff bestehenden Lagerschale verdrehbar und begrenzt kippbar gelagert ist, die die Gelenkkugel sowohl auf der dem Kugelzapfen gegenüberliegenden Seite als auch auf der an den Kugelzapfen angrenzenden Seite des Kugeläquators mindestens im Bereich einer kugelringförmigen Lagerfläche lagert, wobei mindestens der die auf der an den Kugelzapfen angrenzenden Seite des Kugeläquators liegende Oberfläche der Gelenkkugel lagernde Teil der Lagerschale in mindestens zwei, gemeinsam eine kugelringförmige Lagerfläche bildende Abschnitte unterteilt ist, die jeweils mittels einer gelenkigen Verbindung für den Durchtritt der Gelenkkugel begrenzt verschwenkbar sind.

Derartige Kugelgelenke sind bekannt. Ihre Lagerschale wird einstückig aus Kunststoff hergestellt, wobei sich an den die oberhalb des Kugeläquators liegende Oberfläche der Gelenkkugel lagernden Teil der Lagerschale ein zylindrischer Teil anschließt, der bei der Montage des Kugelgelenks den Durchtritt der Gelenkkugel ermöglicht und der nach dem Einsetzen der mit der Lagerschale versehenen Gelenkkugel in die Öffnung des Gelenkgehäuses durch Verformen des Gelenkgehäuserandes in eine kugelringförmige Gestalt umgeformt wird, so daß auch die unterhalb des Kugeläquators liegende Oberfläche der Gelenkkugel in der Lagerschale gelagert und auf diese Weise ein Heraustreten der Gelenkkugel aus dem Gelenkgehäuse verhindert wird.

Durch die Herstellung der Lagerschale mit einem zylinderförmigen Teil, der bei der Montage zwangsweise zu einem Kugelring verformt wird, ergeben sich durch den hiermit verbundenen Materialüberschuß undefinierte lokale Eigenspannungen in der Lagerschale, da die im Endzustand kugelringförmige Form eine kleinere Oberfläche als die im Ausgangszustand zylindrische Form hat. Hieraus resultieren örtlich erhöhte Pressungszustände zwischen dem Kunststoff der Lagerschale und den benachbarten Stahlteilen der Gelenkkugel und des Gelenkgehäuses, womit die Gefahr mangelhafter Schmierung und des Entstehens von stick-slip-Effekten verbunden ist. Außerdem können unerwünschte Änderungen der Gelenkeigenschaften im Laufe der Zeit entstehen, da sich die während des Montageprozesses induzierten Eigenspannungszustände in der Lagerschale durch unkontrolliertes Relaxieren des Kunststoffes im Laufe der Gelenklebensdauer abbauen. Um definierte und über die Gelenklebensdauer gleichbleibende Gelenkeigenschaften herbeizuführen, ist es deshalb bei den bekannten Kugelgelenken häufig erforderlich, die Gelenke zum Abbau von durch die Lagerschale hervorgerufenen Eigenspannungen thermisch nachzubehandeln.

Die FR 2 449 819 offenbart ein Kugelgelenk mit einer Lagerschale, die in dem zapfenseitig des Kugeläquators gelegenen Bereich mehrere durch Spalten getrennte Abschnitte aufweist, welche mit dem jenseits des Kugeläquators gelegenen Bereich der Lagerschale über eine in etwa auf Höhe des Kugeläquators umlaufende "weiche Zone" gelenkig verbunden sind.

Der Erfindung liegt die **Aufgabe** zugrunde, ein Kugelgelenk der eingangs definierten Art zu schaffen, das auch ohne thermische Nachbehandlung die Schaffung und Aufrechterhaltung definierter Gelenkeigenschaften über die gesamte Gelenklebensdauer garantiert.

Die **Lösung** dieser Aufgabenstellung durch die Erfindung ist dadurch gekennzeichnet, daß die Lagerschale in zwei, jeweils eine Lagerschalenhälfte bildende Abschnitte unterteilt ist, die im Kopfbereich durch ein rechtwinklig zur Gelenkachse verlaufendes Filmscharnier unmittelbar miteinander verbunden sind.

Mit dem erfindungsgemäßen Vorschlag wird es möglich, die aus Kunststoff bestehende Lagerschale bereits bei ihrer vorzugsweise durch Spritzgießen erfolgenden Erzeugung mit der Form des Einbauzustandes herzustellen. Mindestens der die auf der an den Kugelzapfen angrenzenden Seite des Kugeläquators liegende Oberfläche der Gelenkkugel lagernde Teil der Lagerschale wird erfindungsgemäß in mindestens zwei Abschnitte unterteilt, die gemeinsam eine kugelringförmige Lagerfläche bilden, für den Durchtritt der Gelenkkugel jedoch mittels eines Filmscharniers begrenzt verschwenkbar sind. Hierdurch werden zu undefinierten Eigenspannungen in der Kunststoffschale führende Verformungen derselben und die hieraus resultierenden voranstehend erläuterten Nachteile vermieden. Die bereits in der Form ihres späteren Einbauzustandes erzeugten, gemeinsam eine kugelringförmige Lagerfläche zur Lagerung der auf der an den Kugelzapfen angrenzenden Seite des Kugeläquators liegenden Oberfläche der Gelenkkugel dienenden Abschnitte werden lediglich im Bereich ihres Filmscharniers begrenzt verschwenkt, wenn die Lagerschale auf die Lagerkugel aufgesetzt wird. Eine thermische Nachbehandlung des montierten Kugelgelenkes ist damit entbehrlich.

Zudem ist die Lagerschale in zwei, jeweils eine Lagerschalenhälfte bildende Abschnitte unterteilt, die im Kopfbereich durch ein rechtwinklig zur Gelenkachse verlaufendes Filmscharnier unmittelbar miteinander verbunden sind.

Dadurch ergibt sich lediglich ein kurzes Filmscharnier, dessen Beweglichkeit im Einbauzustand aufgehoben ist.

Mit der Erfindung wird schließlich vorgeschlagen, die Lagerschale mit ihrer Mantelfläche zumindest in den sich an ein Filmscharnier anschließenden Bereichen durch Formanpassung am Gelenkgehäuse anliegend auszubilden. Hierdurch wird sichergestellt, daß die Funktion der Filmscharniere im Einbauzustand aufgehoben ist und die Lagerschale eine definierte Abstützung der Gelenkkugel sowohl an ihrer oberhalb des Äquators als auch an ihrer unterhalb des Äquators liegenden Oberfläche zumindest im Bereich einer kugelringförmigen Lagerfläche bewirkt.

Auf der Zeichnung ist ein Ausführungsbeispiel des erfindungsgemäßen Kugelgelenks dargestellt, und zwar zeigen:
- Fig. 1: einen Längsschnitt durch eine Ausführungsform eines Kugelgelenks und
- Fig. 2: eine Schnittdarstellung der Einzelteile des Kugelgelenks gemäß Fig. 1 vor deren Zusammenbau.

Das Kugelgelenk umfaßt einen vorzugsweise aus Stahl hergestellten Kugelzapfen 1, dessen eines Ende zu einer Gelenkkugel 1a geformt ist. Der Kugeläquator 1b der Gelenkkugel 1a ist in den Figuren strichpunktiert angedeutet.

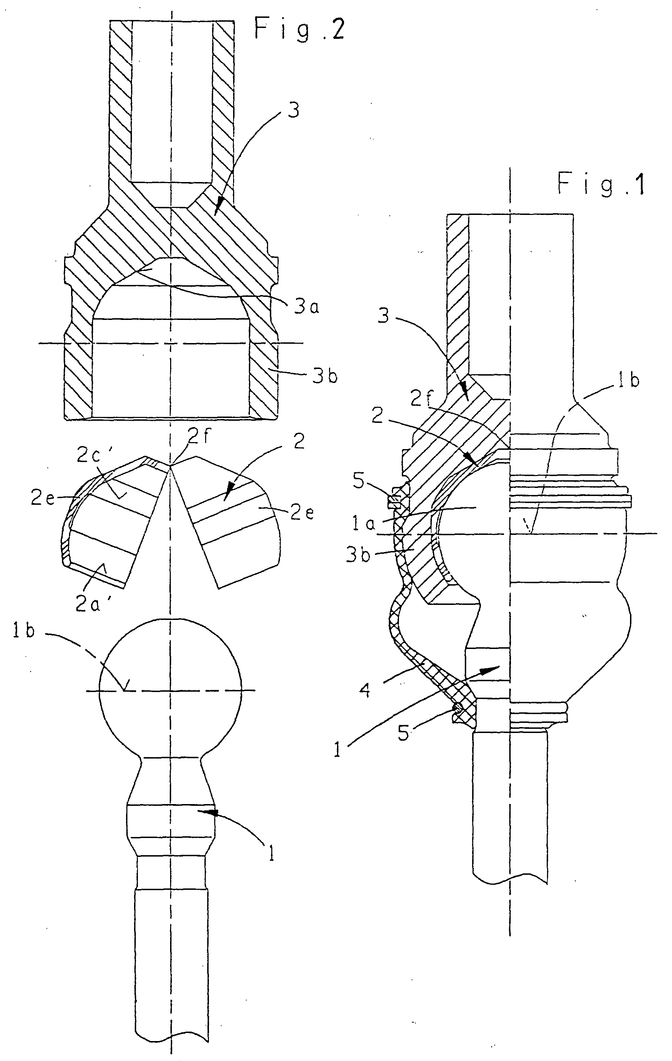

Die Gelenkkugel 1a des Kugelzapfens 1 wird mittels einer aus Kunststoff bestehenden Lagerschale 2 verdrehbar sowie begrenzt kippbar in einem Gelenkgehäuse 3 gelagert, das mit einer Ausnehmung 3a zur Aufnahme der Lagerschale 2 und der in dieser angeordneten Gelenkkugel 1a ausgebildet ist, wie insbesondere die Figur 2 erkennen läßt. Der den auf der an den Kugelzapfen 1 angrenzenden Seite des Kugeläquators 1b liegenden Teil der Gelenkkugel 1a umgebende Randbereich 3b des Gelenkgehäuses 3 ist im Ausgangszustand zylindrisch ausgebildet, wie wiederum die Figur 2 erkennen läßt. Dieser Randbereich 3b wird nach Einsetzen der mit der Lagerschale 2 versehenen Gelenkkugel 1a plastisch verformt, und zwar mittels einer Matrize, welche dem Randbereich 3b des Gelenkgehäuses 3 die in der Figur 1 erkennbare endgültige Form verleiht. In diesem Endzustand stützt sich auch der die auf der an den Kugelzapfen 1 angrenzenden Seite des Kugeläquators 1b liegende Oberfläche der Gelenkkugel 1a lagernde Teil der Lagerschale 2 auf einer kugelringförmigen Fläche in der Ausnehmung 3a des Gelenkgehäuses 3 ab.

Um die Lagerschale 2 - vorzugsweise durch Spritzgießen - bereits bei der Erzeugung in der Form des späteren Einbauzustandes herzustellen, ist mindestens der die auf der an den Kugelzapfen 1 angrenzenden Seite des Kugeläquators 1b liegende Oberfläche der Gelenkkugel 1a lagernde Teil der Lagerschale 2 in mindestens zwei Abschnitte 2e unterteilt, die jeweils mittels eines Filmscharniers 2f begrenzt verschwenkbar sind.

Die Lagerschale 2 ist dabei in zwei jeweils eine Lagerschalenhälfte 2e bildende Abschnitte unterteilt, die im Kopfbereich durch ein rechtwinklig zur Längsachse des Kugelgelenks verlaufendes Filmscharnier 2f unmittelbar miteinander verbunden sind. Die Lagerschale 2 wird bei der Herstellung in der Form des Einbauzustandes hergestellt. Jede Lagerschalenhälfte 2e ist mit einer kugelringförmigen Lagerfläche 2c' zur Lagerung der auf der dem dem Kugelzapfen 1 gegenüberliegenden Seite des Kugeläquators 1b liegenden Oberfläche der Gelenkkugel 1a und mit einer kugelringförmigen Lagerfläche 2a' zur Lagerung der auf der an den Kugelzapfen 1 angrenzenden Seite des Kugeläquators 1b liegenden Oberfläche der Gelenkkugel 1a ausgebildet, wie die Fig. 2 deutlich erkennen läßt.

Die Lagerschale 2 wird durch begrenztes Verschwenken der Lagerschalenhälften 2e auf die Gelenkkugel 1a des Kugelzapfens 1 aufgesetzt, bevor die Gelenkkugel 1a mit aufgesetzter Lagerschale 2 in die Ausnehmung 3a des Gelenkgehäuses 3 eingesetzt wird, dessen Randbereich 3b anschließend aus der in der Figur 2 dargestellten Ausgangsform in die endgültige Form nach der Figur 1 überführt wird.

Wie die Figuren 1 erkennen läßt, liegt die Lagerschale 2 mit ihrer Mantelfläche zumindest in den sich an ein Filmscharnier 2f anschließenden Bereichen durch Formanpassung in der Ausnehmung 3a des Gelenkgehäuses 3 an, so daß im montierten Endzustand die Funktion des Filmscharniers 2f aufgehoben ist und die Lagerschale 2 die Gelenkkugel 1a mit definierten Gelenkeigenschaften lagert.

Der Vollständigkeit wegen ist in Fig. 1 ein Gelenkbalg 4 dargestellt, der mit seiner gehäuseseitigen Öffnung am Gelenkgehäuse 3 und mit seiner zapfenseitigen Öffnung am Kugelzapfen 1 jeweils mittels eines Spannringes 5 festgelegt ist und das Eintreten von Verunreinigungen in das Gelenk sowie das Austreten von ggf. verwendetem Schmiermedium verhindert.

### Bezugszeichenliste:

- 1: Kugelzapfen
- 1a: Gelenkkugel
- 1b: Kugeläquator
- 2: Lagerschale
- 2e: Lagerschalenhälfte
- 2f: Filmscharnier
- 2a': Lagerfläche
- 2c': Lagerfläche
- 3: Gelenkgehäuse
- 3a: Ausnehmung
- 3b: Randbereich
- 4: Gelenkbalg
- 5: Spannring

## Patentansprüche

1. Kugelgelenk aus einem Kugelzapfen (1) und einem Gelenkgehäuse (3), in dem die Gelenkkugel (1a) mittels einer aus Kunststoff bestehenden Lagerschale (2) verdrehbar und begrenzt kippbar gelagert ist, die die Gelenkkugel (1a) sowohl auf der dem Kugelzapfen (1) gegenüberliegenden Seite als auch auf der an den Kugelzapfen (1) angrenzenden Seite des Kugeläquators (1b) mindestens im Bereich einer kugelringförmigen Lagerfläche (2a', 2c') lagert, wobei mindestens der die auf der an den Kugelzapfen (1) angrenzenden Seite des Kugeläquators (1b) liegende Oberfläche der Gelenkkugel (1a) lagernde Teil der Lagerschale (2) in mindestens zwei, gemeinsam eine kugelringförmige Lagerfläche (2a') bildende Abschnitte (2e) unterteilt ist, die jeweils mittels einer gelenkigen Verbindung (2f) für den Durchtritt der Gelenkkugel (1a) begrenzt verschwenkbar sind,
**dadurch gekennzeichnet,**
daß die Lagerschale (2) in zwei, jeweils eine Lagerschalenhälfte (2e) bildende Abschnitte unterteilt ist, die im Kopfbereich durch ein rechtwinklig zur Gelenkachse verlaufendes Filmscharnier (2f) unmittelbar miteinander verbunden sind.

2. Kugelgelenk nach Anspruch 1, dadurch gekennzeichnet, daß die Lagerschale (2) mit ihrer Mantelfläche zumindest in den sich an ein Filmscharnier (2f) anschließenden Bereichen durch Formanpassung am Gelenkgehäuse (3) anliegt.

## Claims

1. Ball joint consisting of a ball pin (1) and a joint housing (3) in which the ball part of the joint (1a) is mounted in a bearing seat (2), consisting of plastic, so that it can turn and tilt to a limited extent, which holds the ball part of the joint (1) both on the side of the mid-line of the ball (1b) opposite the ball pin (1) and on the side adjacent to the ball pin (1) at least in the area of a bearing surface (2a', 2c') shaped to form a ball race, whereby at least the part of the bearing seat (2) holding the surface of the ball part of the joint (1a) on the side of the mid-line of the ball (1b) adjacent to the ball pin (1) is divided into at least two sections (2e), together forming a ball race-shaped bearing surface (2a') each of which can be swivelled to a limited extent by means of an articulated connection (2f) to enable the ball part of the joint (1a) to pass through
**characterised in that**
the bearing seat (2) is divided into two sections, each forming one half of the bearing seat (2e), which are directly connected together in the head area by a film hinge (2f) which runs at right angles to the axis of the joint.

2. Ball joint according to claim 1, characterised in that the bearing seat (2) is in contact with the joint housing (3) with its sheath surface at least in the areas adjacent to a film hinge (2f) by shape adjustment.

## Revendications

1. Articulation à rotule composée d'un pivot à rotule (1) et d'un logement (3) dans lequel la rotule (1a) est logée de façon à pouvoir tourner et à pouvoir basculer de manière limitée dans une coquille de coussinet (2) qui est en matière plastique et qui loge la rotule (1a) aussi bien du côté, opposé au pivot (1), de l'équateur de rotule (1b) que du côté, adjacent au pivot (1), de l'équateur de rotule (1b) au moins dans la zone d'une surface d'appui en forme d'anneau de sphère (2a', 2c'), dans laquelle au moins la partie de la coquille de coussinet (2) qui loge la surface de la rotule (1a) qui se trouve du côté, adjacent au pivot (1), de l'équateur de rotule (1b) est divisée en deux tronçons (2e) qui forment ensemble la surface d'appui (2a') en forme d'anneau de sphère et qui peuvent pivoter de manière limitée à chaque fois au moyen d'une liaison articulée (2f) pour laisser passer la rotule (1a),
caractérisée en ce que 1a coquille de coussinet (2) est divisée en deux tronçons qui forment chacun une moitié de coquille de coussinet (2e) et qui sont reliés directement l'un à l'autre dans la zone de tête par une charnière à film (2f) s'étendant perpendiculairement à l'axe d'articulation.

2. Articulation à rotule selon la revendication 1, caractérisée en ce que la coquille de coussinet (2) porte, avec sa surface enveloppante, contre le logement (3) par adaptation de forme au moins dans les zones se raccordant à une charnière à film (2f).
